Europäisches Patentamt

(19) European Patent Office

Office européen des brevets

(11) Publication number: **0 159 340**
**B1**

(12) **EUROPEAN PATENT SPECIFICATION**

(45) Date of publication of patent specification: **13.04.88**

(51) Int. Cl.⁴: **C 02 F 3/32**

(21) Application number: **84903717.1**

(22) Date of filing: **12.10.84**

(86) International application number:
**PCT/HU84/00049**

(87) International publication number:
**WO 85/01723 25.04.85 Gazette 85/10**

(54) PROCESS FOR PROTECTING LAKES AGAINST EUTROPHIZATION CAUSED BY SUBSOIL WATER.

(30) Priority: **17.10.83 HU 360183**

(43) Date of publication of application:
**30.10.85 Bulletin 85/44**

(45) Publication of the grant of the patent:
**13.04.88 Bulletin 88/15**

(84) Designated Contracting States:
**AT CH DE FR LI NL**

(56) References cited:
**DE-A-2 828 361**
**DE-A-3 138 374**
**DE-A-3 244 787**

(73) Proprietor: **VAROSEPITESI TUDOMANYOS ES TERVEZO INTEZET**
**Krisztina körut 99**
**H-1016 Budapest (HU)**

(72) Inventor: **PLOSZ, Sándor**
**Ozike u. 27**
**H-1211 Budapest (HU)**
Inventor: **FELFÖLDY, Lajos**
**Váci u.45.**
**H-1056 Budapest (HU)**
Inventor: **JAKAB, Sándor**
**Hernád u. 23.**
**H-1078 Budapest (HU)**

(74) Representative: **Sheard, Andrew Gregory et al**
**Kilburn & Strode 30, John Street**
**London WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for protecting lakes against eutrophication cause by subsoil waters.

It is a well known fact that the removal of substances arriving from surface water into lake water, i.e. recipient water, which induce and/or accelerate eutrophication of the recipient water represents a very important task of ecology. This is because the fauna and flora of several lakes have been endangered by various chemical contaminants getting into them. Examples of the worst contaminants include oil washed from roads by rain or other precipitation and thereby getting into streams, pesticides coming from agricultural areas, chemical fertilisers and improperly treated waste.

The technical literature relating to waste water purification describes several solutions. It is frequently emphasized which type of impurities can be removed by which process and which equipment. Most known solutions deal in particular with the purification of industrial waste. The main proposals on this subject include passing waste through an ion-exchanger, and biological purification, in the course of which algae, other microbiological substances or in particular cases plants are used for binding the contaminants or for removing them. Processes based on anaerobic fermentation are also known.

According to DE—B—2129711 biological purification of waste containing pentachlorophenol or any other halogen used phenol is performed, so that the waste to be purified is allowed to stream through the root-zone of tall rushes or bulrushes.

According to CH—A—546707 coarse contaminants are first allowed to precipitate; thereafter waste is led to further treatment plants.

In DE—A—2148996 a proposal for the purification of waste has been described, in course of which waste is allowed to pass through plants; simultaneously purification is promoted by adding bacteria.

However, all the above patents relate only to the purification of waste and not to the purification of lakes.

According to technical literature dealing with the subject, that is to say with the purification of lakes, vegetation was initially considered to be damaging; it was known to produce phytoplankton and lead to marshlanding. Still, in 1980 several authors did not recommend the use of plants for purification, as according to earlier opinion vegetation alone caused lakes to silt, their beds gradually to fill and eventually caused the lakes to dry out.

Only recently has the technical literature described the advantageous application of macrophyte vegetation for sewage purification; however, expert opinion was divided even in 1982 and 1983.

In the patent literature, however, proposals of this nature had appeared earlier.

According to the patent literature several attempts were directed to the removal of eutrophication-causing contaminants by means of biological processes using the nutrient-binding ability of plants, thus purifying surface waters. DE—A—1484387 and US—A—3839189 disclose such proposals. These processes, however, require considerable investment and running costs; in addition, no significant results could be achieved in the purification of water contaminated with substances leading to eutrophication.

The first acceptable solution for the purification of surface water which was suitable for the removal of contaminants leading to the eutrophication of the water into which it fed was described in the Hungarian Patent HU—A—174397 (corresponding to US—A—4333837). A method of biological purification was proposed. This process was realized by separating stream deposits prior to the stream reaching vegetation; thereafter stream water (free of deposits) was spread on a culture of aquatic plants. Substances causing eutrophication contained in the stream were bound by the plants of the aquatic culture, and cleared water was then led into the lake. The patents referred to above also describe the equipment for performing the patented process.

DE—A—3138374 discloses cultures of aquatic plants, bound together in baskets, which float on or are disposed at the banks of lakes.

DE—A—3244787 discloses a water treatment process comprising feeding water to be treated through a bed of aquatic plants in a treatment plant.

Problems connected with eutrophication, however, do not only endanger lakes fed with surface streams. Mine-lakes fed by subsoil water, as well as the water quality of lakes having been formed in natural cavities are also endangered. According to our experiences, even with a lake fed by surface water, special attention has to be paid to harmful phenomena caused by the subsoil water getting into the lake and the contamination induced by it.

With lakes having been fed by subsoil water, eutrophication (the supply with subsoil water enriched in nutrients) results first of all in the growth of reed-grass (see for example the lake in the OMSZK-Garden, near to Budapest), followed by the intense growth of algae (Salt Lake in Nyiregyhaza). In more serious cases the lake becomes saturated with organic substances involving the state of lake destruction or hypertrophy (as for example, in the so-called Bottomless-Lake in Budapest).

It is also known that new holiday centres have been found in the environs of existing mine-lakes and natural lakes in order to relieve over-crowding at popular existing holiday centres and water-side recreation areas. With these newly established holiday centres it could be seen that the water quality deteriorated with unexpected rapidity even though heavy contaminants were apparently not getting into the water. Simultaneously with the establishment of holiday centres, traffic increases, holiday plots are formed, sewage is drained and small gardens appear. The gardens are treated with pesticides and artificial fertilizers. Rain washes these contaminants into the soil and eutrophication of the lake begins or gets faster. A further problem may arise with mine-lakes, where other particular impurities or dangerous waste may appear in the subsoil water.

In general, subsoil water contains nitrate in a quantity sufficient to cause eutrophication under advantageous circumstances. Phosphorus is the limiting nutritive element restricting eutrophication and is mostly missing from subsoil water. However, in an intensely agricultural or urban environment, the subsoil water is also able to supply dissolved orthophosphate in sufficient concentration and quantity.

Sewage escaping from drains near lakes represents a source of considerable contamination, if the limit of the natural purifying ability of the subsoil water is exceeded.

In the case of intense utilization of areas in the environs of lakes, seepage and rain carried into the lake contain phosphorus in such a quantity as is sufficient to start eutrophication. Even today the process is irreversible. According to the prior art, no method is known which could eliminate this harmful phenomenon.

Solutions directed to the prevent of deterioration of water quality which is connected with the death of reed-grass do not lead to the required results, as they merely clear the ground for the algae, which is a nutrient rival. Accordingly, in such a manner only an apparently good result is obtained.

Experiments have also been carried out on the introduction of plant-eating fish; this measure, however, according to the Applicants' experiences promoted planktonic eutrophication as well.

By dredging the bed and removal of deposited organic substances, the phenomenon cannot be prevented; only its final development can be slowed down.

By aeration, the organic substance content of water can be reduced; at the same time, the decomposed organic substance, as a vegetable nutrient, promotes the growth of algae and as a consequence production of further organic substances.

Summing up, it can be said that by means of the aforementioned measures the cause of eutrophication, that is the introduction of nutrients into the bed of the lake, cannot be eliminated, not even if an apparent or delayed result is obtained. This is because eutrophication-inducing materials continuously get into the subsoil water and thereby get into the lake with the subsoil water.

It is also clear that the solution according to the previously mentioned Hungarian Patent — by means of which excellent results could be achieved with surface water — is not suitable for use with subsoil waters, as contaminated subsoil water feeding the lake and thus streaming in at deeper layers cannot be purified by an aquatic plant culture located on a higher level.

Accordingly, the aim of the present invention is to develop a process for protecting lakes fed by subsoil water against eutrophication, that is to say for purifying subsoil water arriving at a lake or other recipient water, which may be fed by surface waters.

The invention is based on the recognition, in so far as the aim set can be achieved, that it may be possible to apply the previously patented solution (HU—A—174397) which works well with surface water, for cleaning subsoil waters.

Subsoil water feeding a lake feeds in one or more aquifer layers having a definable direction of flow.

Accordingly, the task of the process according to the invention lies in changing the direction of flow of subsoil water prior to reaching the lake in some way, and so enabling the subsoil water to be led to a culture of aquatic plants, which effect purification. The special difficulty in solving this task lies in the fact that in order to be able to regulate the direction of flow, subsoil water has to be collected and its cross-section of flow narrowed.

We have found that if above a water impermeable layer at or below the lake bottom a water baffle dam is provided so that it collects subsoil water prior to reaching the lake and narrows its path of flow, and optionally on the water baffle dam a layer is formed having better water permeability than that of the aquifer layer of the soil, the direction of flow can be oriented towards the soil surface. The water permeable layer may be made of gravel. The water baffle dam is made of a material impermeable to water. As for its layout, processes well known in practice of civil engineering can be used. The water permeable layer should preferably reach the expected maximum level of the subsoil water. An aquatic plant culture, for example of water weeds, through which the water to be cleaned is allowed to pass, can be an existing one or a protective zone on the lake-side. The protective zone may be separated from or on the shore of the lake. If necessary, in view of local circumstances, the total periphery of the lake can be surrounded by a protective zone.

Accordingly, the essence of the process according to the invention lies in that above a water impermeable layer at or below the lake-bottom, a water baffle dam is provided in the aquifer across the direction of flow of subsoil water. Thus the path of subsoil water will be closed off and the subsoil water is collected. On the water baffle dam a further layer with good water permeability may be formed, the height of which may reach the expected maximum level of the subsoil water. The flow of subsoil water is thus directed towards the soil surface, whereafter the subsoil water to be cleaned is led to an aquatic plant culture.

With mine-lakes, prior to opening the mine, plans for preventing eutrophication can be prepared and water baffle dams can be arranged in advance in the opening ditch. Similarly, with other lakes too, a process according to the invention can be planned and established in advance, whereby the flow of subsoil water can be well regulated.

Baffled subsoil water and seeping water can advantageously be allowed to flow through a system of aquatic plant cultures arranged as lagoons. The size, position and shape of each lagoon can be planned. The water-balance of the lake (efflux forming the basis of determining the size of the purification systems) can be approximately calculated on the basis of the characteristic changes of evaoporation, draw-off, precipitation and the subsoil water level.

Run off water arising in the vicinity of the shore can be led elsewhere or allowed to flow onto the purification system formed in the bed.

By the application of a process according to the invention, recultivation of mine-lakes and other still water fed with contaminated subsoil waters, can be achieved. This can influence plans and land use for holiday centres. The invention can be applied in country planning of lake environments, in ecological measures connected with shore-regulation, in utilization of areas for establishing holiday centres, for example in the allocation of contaminating and non-contaminating establishments, and the determination of lakeside areas serving for recreation purposes, for preparing plans for lake-rehabilitation and for recultivation of surface mines with a lake. In the course of forming new lakes or in opening a surface mine, the application of our method does not involve considerable extra expense.

A further possibility of the application of the invention is the protection of water quality when constructing surface drinking water access places; purification of contaminated subsoil waters can be performed successfully and safely by using the process.

In one possible embodiment of the invention, a water permeable layer above the water baffle dam may be provided for facilitating water exchange, advantageously in the top-layer, and can be combined in a particular case with an additive, which due to its absorptive ability or its chemical properties binds or retains detrimental or hazardous waste, which would not be retained by the aquatic plant cuture of water-weed or which would be dangerous for the plants. In this way, the safety of the process according to the invention can be further increased, especially if the subsoil water contains particular dangerous contaminants.

An embodiment of the process according to the invention will now be described in detail by reference to the accompanying drawings, wherein

FIGURE 1 illustrates schematically an application of a process according to the invention;

FIGURE 2 shows in detail the arrangement of a water baffle dam; and

FIGURE 3 and 3A show the inflow of subsoil water into the lake and possible methods of diversion of water.

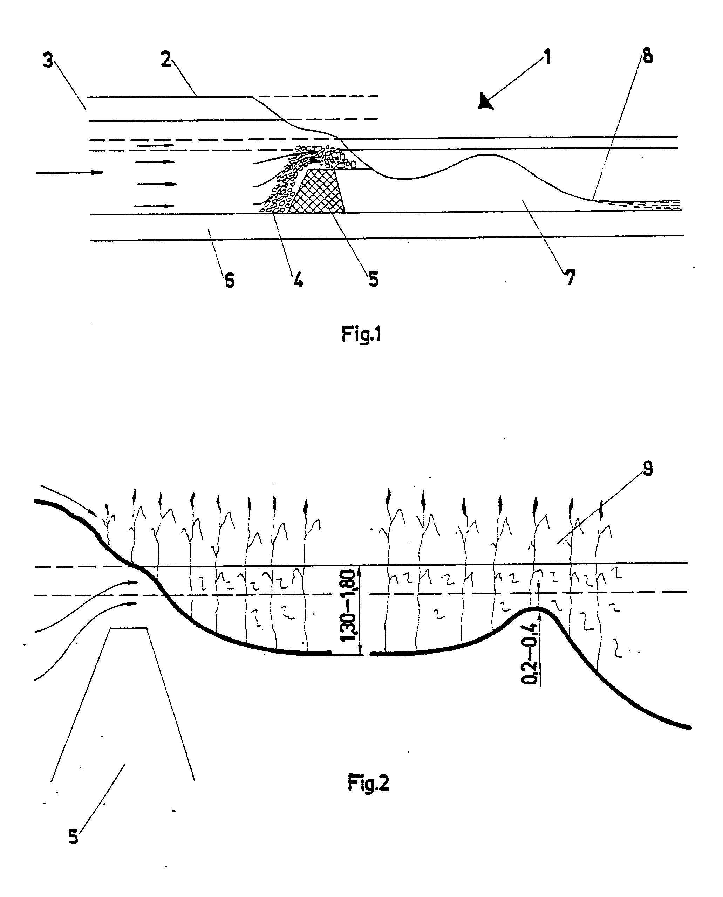

Referring now to the drawings, Figure 1 shows lake 1, the surrounding terrain 2 and a top layer of soil 3. Arrows indicate direction of flow of the subsoil water in an aquifer. Under the lake there is a layer 7 poor in humus; below this layer there is a layer 6 under the lake-bottom 8, which layer is impermeable to water.

A water baffle dam 5 is provided above the water impermeable layer 6 under the lake-bottom and in order to direct collected subsoil water towards the surface, on the water baffle dam 5 a water permeable layer 4 of gravel is provided. The height of the water permeable layer 4 should reach the maximal level of the subsoil water. Thereafter subsoil water, having been directed to the surface, is led to an aquatic plant culture 9 (see Figure 2).

Figure 2 illustrates an advantageous embodiment, according to which subsoil water and run off water are allowed to flow through the aquatic plant culture 9 which is arranged as a lagoon. Formation of the lagoon — as previously mentioned — is based on calculations considering all local features; this means that by calculation, the appropriate size, position and shape can be determined in advance.

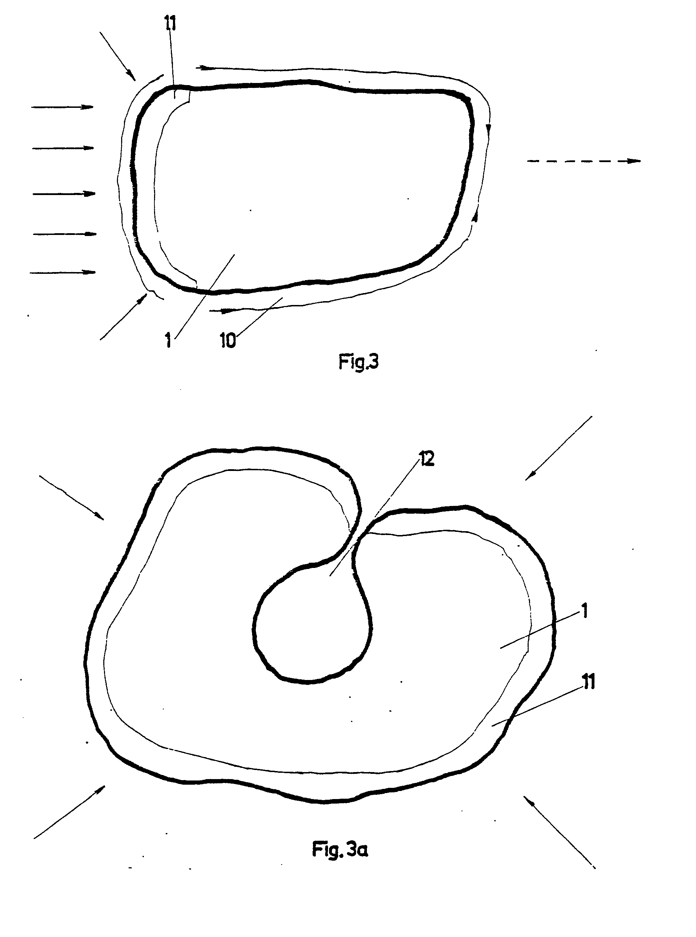

As can be seen from Figures 3 and 3A, subsoil water and run off water can be led — by inserting a purification system — through a protective zone 11 into the lake 1. In Figure 3 the discontinuous arrow indicates an outlet for precipitation water. A protective zone can be formed along the total periphery of the lake 1, while on the part surrounded by the lake non-contaminating establishments, such as a holiday centre or a waterworks 12, can be arranged.

**Claims**

1. A process for protecting a lake against eutrophication caused by subsoil water fed from an aquifer, there being an aquatic plant culture upstream of or in the lake, and a water impermeable layer at or below the lake bottom, the process being characterised by producing, adjacent the lake and above the water impermeable layer, a water baffle dam across the flow of water in the aquifer in such a way as to direct subsoil water in the aquifer towards the surface to the aquatic plant culture.

2. A process as claimed in claim 1, characterised in that the path of the subsoil water is entirely blocked by the water baffle dam up to a depth of from 1.0 to 1.5 m below the expected maximal subsoil water level.

3. A process as claimed in claim 1 or 2, characterised in that the flow of subsoil water is directed to the soil surface through a layer of good water permeability is provided above the water baffle dam.

4. A process as claimed in claim 3, wherein the water permeable layer includes an additive which is capable of binding and/or retaining, either chemically or by absorption, toxic waste which is harmful for the aquatic plant culture of water-weed.

5. A process as claimed in claim 3 or 4, characterised in that as the water permeable layer gravel is used.

6. A process as claimed in any one of claims 1 to 5, characterised in that subsoil water to be purified is directed onto an aquatic plant culture already existing on the shore of the lake.

7. A process as claimed in any one of claims 1 to 6, characterised in that subsoil water to be purified is directed artificially to an aquatic plant culture at least partly surrounding the lake and serving as a protective zone.

8. A process as claimed in any one of claims 1 to 5, characterised in that subsoil water to be purified and run off water are allowed to flow through a lagoon-like system of aquatic plant culture of predetermined size and formation, while run off water is led to the aquatic plant culture through a purification system.

**Patentansprüche**

1. Verfahren zum Schutz eines Sees gegen Eutrophierung durch Grundwasser, welches von einer wasserführenden Schicht zugeführt wird, wobei eine Wasserpflanzenkultur oberhalb des Sees oder im See und eine wasserundurchlässige Schicht am Seeboden oder unterhalb des Seebodens vorgesehen ist, gekennzeichnet durch eine dem See benachbart und oberhalb der wasserundurchlässigen Schicht erfolgende Erstellung eines Wasserablenkdammes quer zum Wasserstrom in der wasserführenden Schicht, in einer solchen Weise, daß das Grundwasser in der wassserführenden Schicht zur Oberfläche der Wasserpflanzenkultur geleitet wird.

2. Verfahren nach Anspruch 1, dadurch gekennzeichnet, daß der Weg des Grundwassers durch den Wasserablenkdamm bis zu einer Höhe von 1.0 bis 1.5 m unterhalb des erwarteten höchsten Grundwasserspiegels völlig abgeschlossen ist.

3. Verfahren nach Anspruch 1 oder 2, dadurch gekennzeichnet, daß der Grundwasserstrom durch eine oberhalb des Wasserablenkdammes angeordnete Schicht großer Wasserdurchlässigkeit zur Erdoberfläche geleitet wird.

4. Verfahren nach Anspruch 3, dadurch gekennzeichnet, daß die wasserdurchlässige Schicht einen Zusatz enthält, welcher toxischen Abfall, der für die Wasserpflanzenkultur aus Wasserpest schädlich ist, entweder chemisch oder durch Absorption zu binden und/oder zurückzuhalten vermag.

5. Verfahren nach Anspruch 3 oder 4, dadurch gekennzeichnet, daß als wasserdurchlässige Schicht Kies verwendet wird.

6. Verfahren nach einem der Ansprüche 1 bis 5, dadurch gekennzeichnet, daß das zu reinigende Grundwasser zu einer bereits am Ufer des Sees bestehenden Wasserpflanzenkultur geleitet wird.

7. Verfahren nach einem der Ansprüche 1 bis 6, dadurch gekennzeichnet, daß das zu reinigende Grundwasser künstlich einer Wasserpflanzenkultur zugeleitet wird, dei wenigstens teilweise den See umgibt und als Schutzzone dient.

8. Verfahren nach einem der Ansprüche 1 bis 5, dadurch gekennzeichnet, daß das zu reinigende Grundwasser und Ablaufwasser durch ein lagunenartiges System von Wasserpflanzenkulturen mit vorbestimmter Größe und Gestaltung durchlaufen gelassen wird, wobei das Ablaufwasser der Wasserpflanzenkultur durch ein Reinigungssystem zugeführt wird.

**Revendications**

1. Un procédé pour protéger un lac contre un eutrophisme causé par de l'eau souterraine alimentée par une nappe aquifère, un système de culture de plantes aquatiques étant placé en amont de ou dans le lac et une couche imperméable à l'eau étant située dans ou en dessous du fond du lac, le procédé étant caractérisé par la production, dans une zone adjacente au lac et située au-dessus de la couche imperméable à l'eau, d'un barrage de déviation d'eau qui est disposé transversalement à l'écoulement de l'eau dans la nappe aquifère de manière à diriger l'eau souterraine dans la nappe aquifère en direction de la surface du système de culture de plantes aquatiques.

2. Un procédé tel que revendiqué dans la revendication 1, caractérisé en ce que le trajet de l'eau souterraine est entièrement bloqué par le barrage de déviation d'eau jusqu'à une profondeur comprise entre 1,0 et 1.5 m en dessous du niveau maximal envisagé pour l'eau souterraine.

3. Un procédé tel que revendiqué dans la revendication 1 ou 2, caractérisé en ce que l'écoulement de l'eau souterraine est dirigé vers la surface du sol au travers d'une couche de bonne perméabilité à l'eau qui est placée au-dessus du barrage de déviation d'eau.

4. Un procédé tel que revendiqué dans la revendication 3, dans lequel la couche perméable à l'eau contient un additif qui est capable de fixer et/ou de retenir, soit chimiquement soit par absorption, des déchets toxiques qui sont nocifs pour le système de culture de plantes aquatiques.

5. Un procédé tel que revendiqué dans la revendication 3 ou 4, caractérisé en ce que, comme couche perméable à l'eau, on utilise du gravier.

6. Un procédé tel que revendiqué dans une quelconque des revendications 1 à 5, caractérisé en ce que de l'eau souterraine à purifier est dirigée en direction d'un système de culture de plantes aquatiques existant déjà sur le rivage du lac.

7. Un procédé tel que revendiqué dans une quelconque des revendications 1 à 6, caractérisé en ce que de l'eau souterraine à purifier est dirigée artificiellement vers un système de culture de plantes aquatiques entourant au moins partiellement le lac et servant de zone protectrice.

8. Un procédé tel que revendiqué dans une quelconque des revendications 1 à 5, caractérisé en ce que de l'eau souterraine à purifier et de l'eau de décharge sont laissées s'écouler au travers d'un système, analogue à un lagon, de culture de plantes aquatiques d'une dimension et forme prédéterminées, tandis que de l'eau de décharge est canalisée vers le système de culture de plantes aquatiques par l'intermédiaire d'un système d'épuration.

Fig.1

Fig.2

Fig.3

Fig.3a